# EUROPÄISCHE PATENTSCHRIFT

(11) **EP 4 033 120 B1**
(45) Veröffentlichungstag und Bekanntmachung des Hinweises auf die Patenterteilung: **06.11.2024**
(21) Anmeldenummer: 22150886.4
(22) Anmeldetag: 11.01.2022
(51) Int. Cl.: F16G 15/06

(54) **BEFESTIGUNGSVORRICHTUNG ZUR BEFESTIGUNG MINDESTENS EINES KETTENSTRANGS AN EINEM HALTEMITTEL**
FASTENING DEVICE FOR FASTENING AT LEAST ONE CHAIN STRAND TO A HOLDING DEVICE
DISPOSITIF DE FIXATION POUR FIXER AU MOINS UN RETOUR DE CHAINE À UN MOYEN DE RETENUE

(30) Priorität: 26.01.2021 DE 102021101592
(43) Veröffentlichungstag der Anmeldung: 27.07.2022
(73) Patentinhaber: RUD Ketten Rieger & Dietz GmbH u. Co. KG, 73432 Aalen (DE)
(72) Erfinder: Arrigoni Neri, Marco, 22046 Merone (IT); Farina, Luigi, 23843 Dolzago (IT)
(74) Vertreter: Grünecker Patent- und Rechtsanwälte PartG mbB

(56) Entgegenhaltungen:
- US-A- 513 854
- US-A1- 2017 087 946

## Beschreibung

Die Erfindung betrifft eine Befestigungsvorrichtung zur Befestigung mindestens eines Kettenstrangs an einem Haltemittel. Dabei können der Kettenstrang, das Haltemittel und die Befestigungsvorrichtung Teile einer Gleitschutz- oder Schneekette sein.

In der US 513 854 A1 ist eine Lastöse zur Verbindung mit einem Zugbaum eines Pferdegespanns gezeigt, wobei die Lastöse zwei Schenkel aufweist, welche an einem Zugbalken befestigt werden. Jeder Schenkel ist an seinem Ende mit einer geschlossenen Öse zur Durchführung eines Befestigungsbolzens versehen.

Bekannt ist femer zum Beispiel eine Befestigungsvorrichtung umfassend einen eine Öse bildenden Halteabschnitt, der in zwei mit dem Halteabschnitt verbundene Schenkel übergeht, wobei die Schenkel unter Ausbildung jeweils eines hakenförmigen Einhängeabschnittes zum Halteabschnitt zurückgebogen sind.

Bei den bekannten Befestigungsvorrichtungen kann eine gewünschte Orientierung des Kettenstrangs durch eine entsprechende Orientierung des gesamten Halteabschnitts erreicht werden. Beispielsweise kann der Halteabschnitt zum Haltemittel geneigt sein. Dies ist jedoch aufwändig in der Konstruktion. Ferner kann damit jeweils nur ein einziger Kettenstrang orientiert werden. Bei mehreren Kettensträngen müssen also mehrere Befestigungsvorrichtungen verwendet werden.

Aufgabe der Erfindung ist es, eine Lösung bereitzustellen, die eine einfachere Konstruktion ermöglicht.

Erfindungsgemäß wird dies dadurch gelöst, dass der Halteabschnitt wenigstens zwei wellenförmig aus der Ebene des Halteabschnitts gebogene Führungsbuchten aufweist, wobei zwei Führungsbuchten in entgegengesetzten Richtungen ausgebuchtet sind.

Die Führungsbucht führt den Kettenstrang zu der gewünschten Orientierung hin. Eine aufwändige Orientierung des gesamten Halteabschnitts ist dadurch nicht notwendig.

Die erfindungsgemäße Lösung kann mit den folgenden, jeweils für sich vorteilhaften und beliebig miteinander kombinierbaren Weiterentwicklungen und Ausgestaltungen weiter verbessert werden.

Um ein einfaches Einführen zu ermöglichen, kann die Öse eine Öffnung aufweisen, die von den Schenkeln begrenzt ist.

Die Führungsbucht kann ein Kettenendglied des Kettenstrangs entlang einer Halterichtung führen. Die Halterichtung kann dabei quer zu einer Spannrichtung des Haltemittels verlaufen.

Die Führungsbucht kann die Orientierung eines Schenkels des Kettenendglieds des Kettenstrangs zu einer vordefinierten Führungsrichtung hin führen. Die Führungsrichtung kann von der Halterichtung verschieden sein. Die Führungsrichtung und/oder die Halterichtung können relativ zu der Spannrichtung des Haltemittels definiert sein.

Um eine gute Führungswirkung zu erzielen, kann die Führungsbucht senkrecht zur Halterichtung und/oder senkrecht zur Führungsrichtung ausgebuchtet sein.

In einer vorteilhaften Ausgestaltung kann die Führungsbucht einen Schenkel des Kettenendglieds entlang der Führungsrichtung umgeben. Die Führungsrichtung kann so gewählt sein, dass der Kettenstrang entlang der Halterichtung gehalten ist. Die Führungsrichtung kann von der Halterichtung abweichen, insbesondere, wenn gedrehte Kettenglieder verwendet werden. Bei gedrehten Kettengliedern kann die Richtung der Schenkel von einer Längsrichtung, entlang der die Kette verläuft, abweichen. Ferner können die Buge relativ zueinander verdreht sein und nicht innerhalb einer Ebene liegen. Bei nicht-gedrehten Kettengliedern kann die Führungsrichtung parallel zur Halterichtung und/oder parallel zur Längsrichtung verlaufen.

Für eine gute Halte- und Führungswirkung kann die Führungsbucht einen entlang der Führungsrichtung verlaufenden Kanal für den Schenkel bilden. Im montierten Zustand kann der Schenkel an Seitenwänden des Kanals anliegen.

Die zwei Führungsbuchten können zwei Schenkeln eines Kettenendgliedes zugeordnet sein. Dazu können beispielsweise die Abstände zwischen den zwei Führungsbuchten entsprechend dimensioniert sein, insbesondere die Abstände zwischen zwei Scheiteln der Führungsbuchten. In einer vorteilhaften Ausgestaltung sind die Führungsbuchten in und entgegen einer Auflagerichtung ausgebuchtet, entlang der die Befestigungsvorrichtung beispielsweise von einer Flanke eines Reifens vorsteht, wenn sie aufgelegt ist. Die Auflagerichtung kann dabei senkrecht zur Ebene des Halteabschnitts verlaufen.

Gemäß einer weiteren vorteilhaften Ausgestaltung kann ein Abschnitt des Halteabschnitts Teil zweier Führungsbuchten sein. Dadurch wird die Befestigungsvorrichtung besonders kompakt.

Beispielsweise kann ein solcher Teil zwischen zwei Scheiteln der Führungsbuchten liegen und/oder die beiden Scheitel der Führungsbuchten verbinden.

Die Führungsbuchten können am Halteabschnitt gegenüber der Öffnung der Öse angeordnet sein.

In einer vorteilhaften Ausgestaltung kann der Halteabschnitt zwei Führungsbuchten für zwei Kettenstränge aufweisen. Dabei können die Halterichtungen der beiden Führungsbuchten verschieden sein. Die beiden Halterichtungen können symmetrisch zu einer Linie senkrecht zu der Spannrichtung sein, um eine gleichmäßige Kräfteverteilung zu erzielen.

In einer besonders vorteilhaften Ausgestaltung können vier Führungsbuchten für zwei Kettenstränge vorhanden sein. Jeweils zwei Führungsbuchten können für einen Kettenstrang vorgesehen sein.

Die Befestigungsvorrichtung kann aus einem geformten Drahtstück bestehen. Dies kann eine einfache Fertigung ermöglichen. Die Befestigungsvorrichtung kann aus einem einzigen Drahtstück bestehen. Der Begriff "geformt" umfasst insbesondere gebogen und querschnittsverändert.

Ein Querschnitt der Befestigungsvorrichtung kann im Bereich des Einhängeabschnitts kreisförmig sein. Dadurch kann die Befestigungsvorrichtung einfach herzustellen sein.

In einer alternativen Ausgestaltung kann ein Querschnitt der Befestigungsvorrichtung im Bereich des Einhängeabschnitts abgeflacht sein. Dadurch kann die Befestigungsvorrichtung kompakter sein.

Im Bereich des Halteabschnitts kann ein Querschnitt der Befestigungsvorrichtung abgeflacht sein. Dies kann beispielsweise dazu dienen, ein Kettenendglied zusätzlich auszurichten, da ein solcher Querschnitt gut in den typischerweise länglichen Innenraum eines Kettenendgliedes passen kann. Auch kann dadurch die Stabilität und Tragfähigkeit hoch sein, insbesondere in der Richtung, in der der Querschnitt eine größere Abmessung hat, beispielsweise entlang einer Halterichtung.

Insbesondere kann der Halteabschnitt in einer Auflagerichtung eine geringere Dicke haben als senkrecht dazu und/oder entlang der Halterichtung. Die Auflagerichtung kann senkrecht zu der Spannrichtung und der Halterichtung sein. Ferner kann die Auflagerichtung senkrecht zu der Ebene des Halteabschnitts sein.

Der Halteabschnitt kann eine zweizählige Rotationssymmetrie aufweisen. Die Befestigungsvorrichtung kann dadurch besonders leicht herzustellen sein, da man dann nicht mehr auf die Orientierung achten muss. Beispielsweise kann zuerst der Halteabschnitt mit der Führungsbucht ausgeformt werden und anschließend die Schenkel umgebogen werden. Bei einem solchen Umbiegevorgang ist bei einer zweizähligen Rotationssymmetrie die Orientierung des Halteabschnittes egal. Ein weiterer Vorteil kann darin gesehen werden, dass zwei Kettenstränge verwendet werden können, bei denen die Kettenglieder jeweils in derselben Verdrehrichtung verdreht sind, zum Beispiel jeweils nach Art eines Linksgewindes.

Der Halteabschnitt kann eine Haltefläche zum Halten entlang der Halterichtung aufweisen. Die Haltefläche kann zumindest abschnittsweise senkrecht zur Halterichtung verlaufen. Ferner kann die Haltefläche zumindest entlang einer Raumrichtung konkav verlaufen, um eine sichere Befestigung zu ermöglichen.

In einer vorteilhaften Ausgestaltung können die Schenkel jeweils einen parallel zur Ebene des Halteabschnitts verlaufenden Abschnitt aufweisen. Insbesondere können die Schenkel parallel zueinander verlaufen.

In einer weiteren vorteilhaften Ausgestaltung kann die Befestigungsvorrichtung spiegelsymmetrisch sein. Eine solche Ausgestaltung kann beispielsweise einfach herzustellen sein und insbesondere bei geraden Kettensträngen verwendet werden.

Der Einhängeabschnitt kann senkrecht zur Spannrichtung offen sein, um ein einfaches seitliches Einführen zu ermöglichen.

Die Schenkel können in das Kettenendglied einführbar sein. Das Kettenendglied kann von den Schenkeln zum Halteabschnitt überführbar sein, insbesondere wenn das Haltemittel nicht aufgenommen ist. Dazu kann die Befestigungsvorrichtung von den Schenkeln zum Halteabschnitt einen Querschnitt aufweisen, der in das Kettenendglied einschreibbar ist.

Vorteilhafterweise kann die Befestigungsvorrichtung dazu ausgestaltet sein, eine Bewegung des Kettenendglieds aus dem Halteabschnitt heraus durch Anschlagen an einem aufgenommenen Haltemittel zu blockieren. Dies kann die Befestigungsvorrichtung sicherer machen.

In einem montierten Zustand kann die Kombination aus Halteabschnitt und Kettenendglied in der Auflagerichtung gemessen eine Höhe aufweisen, die kleiner ist als die Breite des Kettenendglieds. In weiteren vorteilhaften Ausgestaltungen kann die Höhe kleiner als 80%, 60%, oder 50% der Breite des Kettenendglieds sein. Eine minimale Dicke ist durch die Dicke des Kettenglieds gegeben. Diese Dicke kann beispielsweise 30% der Breite des Kettenendglieds entsprechen.

In einem montierten Zustand kann die Kombination aus Halteabschnitt und Kettenendglied in der Auflagerichtung gemessen eine Höhe aufweisen, die kleiner ist als 150% der Kombination aus der Dicke des Materials im Halteabschnitt plus der Dicke des Kettenendglieds. Insbesondere kann die Höhe kleiner als 120% der Kombination aus der Dicke des Materials im Halteabschnitt plus der Dicke des Kettenendglieds sein. Als Untergrenze ist ein Wert von 100% der Kombination aus der Dicke des Materials im Halteabschnitt plus der Dicke des Kettenendglieds anzusehen.

Der Querschnitt im Halteabschnitt kann derart ausgestaltet sein, dass das Kettenendglied eine Beweglichkeit von maximal ±45° um die Halterichtung herum hat. In besonders vorteilhaften Ausgestaltungen beträgt die maximale Beweglichkeit ±30°, ±20° oder ±15°. Andererseits sollte eine gewisse minimale Beweglichkeit vorhanden sein. Die Beweglichkeit kann beispielsweise größer als ±5° oder ±10° sein. Die Beweglichkeit kann in verschiedenen Richtungen verschieden groß sein, zum Beispiel entlang der Auflagerichtung und senkrecht dazu.

Um eine gute Halte- und Ausrichtwirkung zu erzielen, kann eine Querschnittslänge des Halteabschnitts 30 bis 90% der Differenz aus der inneren lichten Länge und der Kettendicke des Kettenendglieds entsprechen. Vorzugsweise kann dieser Wert 70 bis 80% betragen.

Ferner kann eine Querschnittsbreite des Halteabschnitts 30 bis 90% der inneren lichten Weite des Kettenendglieds entsprechen. Auch dadurch kann eine gute Halte- und Ausrichtwirkung erzielt werden. Vorzugsweise kann dieser Wert 70 bis 80% betragen.

Die Erfindung umfasst ferner eine Anordnung, umfassend eine Befestigungsvorrichtung, ein in der Befestigungsvorrichtung aufgenommenes Haltemittel und mindestens einen von der Befestigungsvorrichtung an dem Haltemittel befestigten Kettenstrang. Das Haltemittel kann ein Halteseil, einen Haltedraht, ein Kettenglied oder ein Kunststoffformteil umfassen oder ein Halteseil, ein Haltedraht, ein Kettenglied oder ein Kunststoffformteil sein.

Im montierten Zustand kann das Haltemittel kreisförmig oder im Wesentlichen kreisförmig verlaufen. Auch ein etwa polygonaler Verlauf ist vorteilhaft. Insbesondere können sich Befestigungsvorrichtungen an den Ecken des Polygons befinden.

Das Haltemittel kann eine Metallseele und einen mit der Metallseele verbundenen Mantel umfassen. Der Mantel kann insbesondere aus Kunststoff bestehen oder Kunststoff umfassen.

In einer vorteilhaften Ausgestaltung kann der Mantel an die Metallseele anextrudiert sein. Dadurch ist eine einfache Herstellung möglich.

In einer alternativen Ausgestaltung kann der Mantel separat hergestellt und anschließend auf die Metallseele aufgeschoben werden.

Im Bereich der Befestigungsvorrichtung kann der Mantel entfernt sein.

Die Ketten und Kettenglieder der Kettenstränge können standardisiert sein. Als Standards können gesetzliche Normen, etwa DIN, EN, nationale oder internationale Normen, oder betriebliche Normen in Frage kommen.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

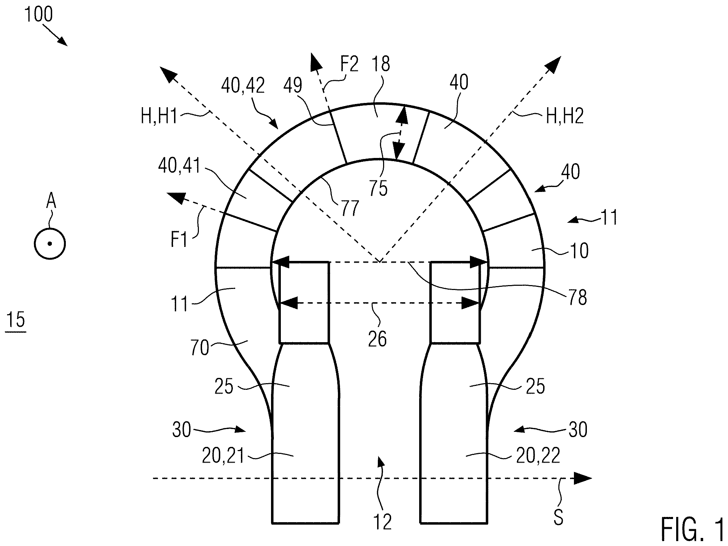

- Fig. 1: zeigt eine schematische Frontansicht eines Ausführungsbeispiels einer Befestigungsvorrichtung;

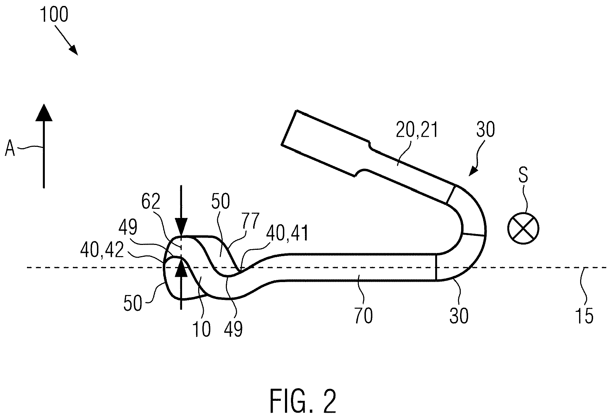

- Fig. 2: zeigt eine schematische Seitenansicht des Ausführungsbeispiels aus Fig. 1;

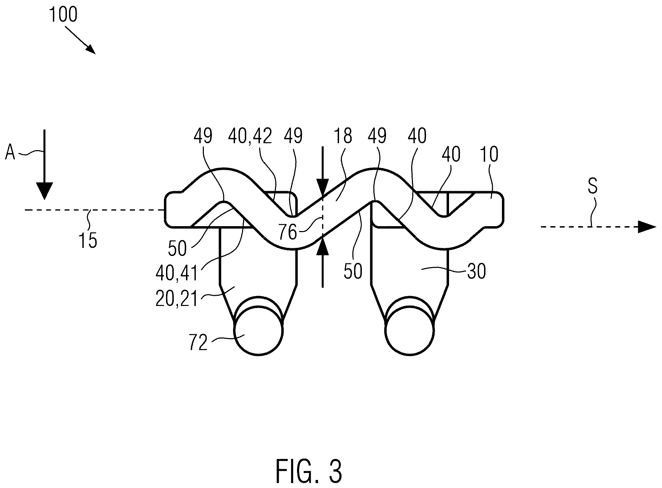

- Fig. 3: zeigt eine schematische Topansicht des Ausführungsbeispiels aus Fig. 1;
- Fig. 4: zeigt eine schematische Frontansicht eines weiteren Ausführungsbeispiels einer Befestigungsvorrichtung zusammen mit zwei Kettensträngen und einem Haltemittel;
- Fig. 5: zeigt eine schematische Perspektivansicht des Ausführungsbeispiels aus Fig. 4.

In den Figuren sind zwei leicht verschiedene Ausführungsformen einer Befestigungsvorrichtung 100 gezeigt. Die Befestigungsvorrichtungen dienen jeweils dazu, mindestens einen Kettenstrang 80 an einem Haltemittel 90 zu befestigen. Beispielsweise kann der Kettenstrang 80 Teil einer Gleitschutzkette oder einer Schneekette sein, wobei der Kettenstrang 80 zumindest teilweise auf einer Lauffläche aufliegen kann und das Haltemittel 90 seitlich an einer Flanke des Reifens angeordnet sein kann. Dabei kann das Haltemittel 90 im montierten Zustand geschlossen verlaufen, zum Beispiel etwa kreisförmig oder etwa polygonförmig.

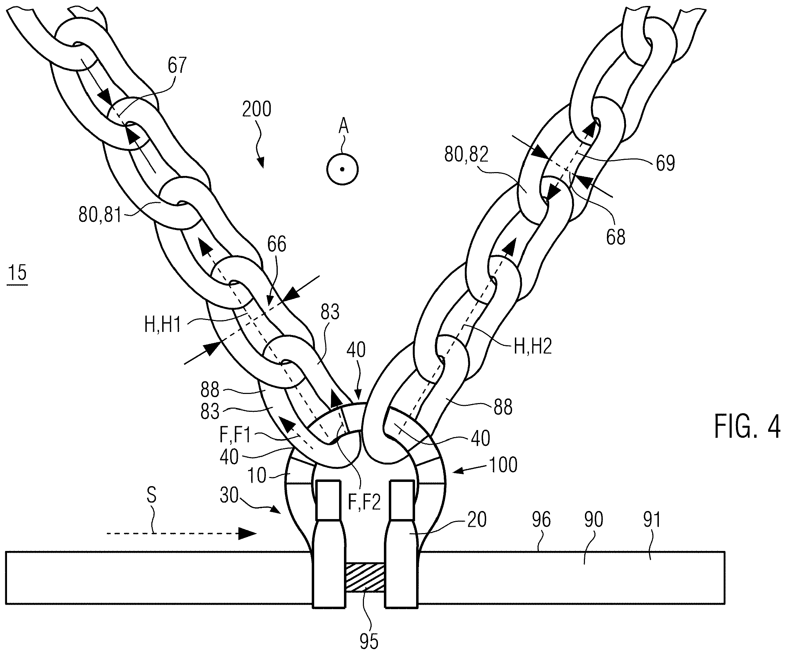

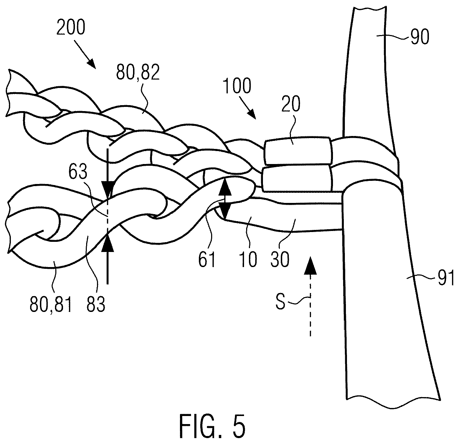

Die Befestigungsvorrichtung 100 weist jeweils einen eine Öse 11 bildenden Halteabschnitt 10 auf, der in zwei mit dem Halteabschnitt 10 verbundene Schenkel 20 übergeht. Dabei sind die Schenkel 20 unter Ausbildung jeweils eines hakenförmigen Einhängeabschnittes 30 zum Halteabschnitt 10 zurückgebogen. In dem Beispiel aus den Figuren 4 und 5 sind zwei Kettenstränge 80, 81, 82 an der Befestigungsvorrichtung 100 angeordnet. Diese Figuren zeigen eine Anordnung 200, die auch noch das Haltemittel 90 umfasst.

Der Halteabschnitt 10 dient zur Aufnahme von Kettenendgliedern 88 der Kettenstränge 80, 81, 82. Insbesondere ist der Halteabschnitt 10 in den Öffnungen der Kettenendglieder 88 unverlierbar aufgenommen. Dazu kann ein Schenkel 20 in ein Kettenendglied 88 eingeführt werden und das Kettenendglied 88 dann zum Halteabschnitt 10 geführt werden. Die Befestigungsvorrichtung 100 kann also entlang ihrer gesamten Erstreckung einen Querschnitt aufweisen, der in ein Kettenendglied 88 einschreibbar ist, auch wenn das Kettenendglied 88 an weiteren Kettengliedern befestigt ist.

Ein an einem Ende gelegener Abschnitt 22 eines Schenkels 20 kann zum leichten Einführen einen kreisförmigen Querschnitt 72 aufweisen. Im Halteabschnitt 10 kann der Querschnitt anders ausgestaltet sein, beispielsweise abgeflacht. Entlang der Halterichtung H kann die Dicke größer sein als entlang einer Richtung senkrecht dazu, beispielsweise einer Auflagerichtung A senkrecht zur Ebene 15. Dadurch kann eine Orientierung des Kettenendglieds 88 erzielt werden. Ferner kann dadurch die Kraft, die zwischen dem Kettenendglied 88 und der Befestigungsvorrichtung 100 entlang einer gewünschten Richtung wirken kann, höher sein.

Die Einhängeabschnitte 30 dienen jeweils zur Aufnahme des Haltemittels 90. Beispielsweise kann das Haltemittel ein Halteseil 91 sein. In alternativen Ausgestaltungen kann das Haltemittel 90 beispielsweise ein Draht oder eine Kette sein. In dem gezeigten Beispiel umfasst das Halteseil 91 eine Metallseele 95 und einen darum herum angeordneten Mantel 96. Da die Einhängeabschnitte 30 jeweils senkrecht zu der Spannrichtung S offen sind, kann das Haltemittel 90 einfach seitlich eingelegt werden. Dies ermöglicht auch eine vorteilhafte Ausgestaltung des Spannseils 91, bei dem der Mantel 96 an die Metallseele 95 anextrudiert ist. An den Stellen, an denen die Befestigungsvorrichtungen 100 angeordnet werden, kann der Mantel 96 von der Metallseele 95 entfernt werden. Eine solche Ausgestaltung ist einfacher in der Montage, als beispielsweise eine Ausgestaltung, bei der auf eine Metallseele 95 entlang einer Längsrichtung ein hohler Mantel aufgeschoben wird.

Die Befestigungsvorrichtung 100 kann so ausgestaltet sein, dass die Kettenendglieder 88 nur von dem Abschnitt 22 im Halteabschnitt 10 überführt werden können, wenn kein Haltemittel 90 im Einhängeabschnitt 30 vorhanden ist. Ist ein solches Haltemittel 90 vorhanden, kann es ein Herausrutschen des Kettenendgliedes 88 aus dem Halteabschnitt 10 verhindern.

Der Halteabschnitt 10 weist mehrere wellenförmig aus der Ebene 15 des Halteabschnitts 10 gebogene Führungsbuchten 40 auf. Diese dienen dazu, jeweils einen Schenkel 83 eines Kettenendglieds 88 aufzunehmen und den Schenkel 83 und damit das Kettenendglied 88 zu einer gewünschten Orientierung hin zu führen. Die Kettenstränge 80, 81, 82 sollen im montierten Zustand jeweils entlang einer Halterichtung H, H1, H2 orientiert sein. Ein erster Kettenstrang 80, 81 soll dabei entlang einer ersten Halterichtung H, H1 verlaufen, ein zweiter Kettenstrang 80, 82 entlang einer zweiten Halterichtung H, H2, die unterschiedlich ist von der ersten Halterichtung H, H1. Die Halterichtungen H, H1, H2 verlaufen dabei jeweils schräg zur Spannrichtung S des Haltemittels 90.

Insbesondere bei gedrehten Kettengliedern, wie sie beispielsweise in den Figuren 4 und 5 gezeigt sind, können Führungsrichtungen F, F1, F2, entlang der die Führungsbuchten 40, 41, 42 die nicht parallelen Schenkel 83 führen, von den Halterichtungen H, H1, H2 abweichen. Insbesondere können die Führungsrichtungen F, F1, F2 schräg zur Ebene 15 verlaufen, während die Halterichtungen H, H1, H2 in der Ebene 15 oder parallel zur Ebene 15 verlaufen. Die Führungsbuchten 40, 41, 42 können jeweils einen entlang einer Führungsrichtung F, F1, F2 verlaufenden Kanal 50 bilden, der jeweils einen Schenkel 83 aufnimmt und den Schenkel 83 um die entsprechende Führungsrichtung F, F1, F2 herum umgibt.

In dem gezeigten Beispiel weist die Befestigungsvorrichtung 100 vier Führungsbuchten 40 auf, wobei jeweils zwei benachbarte Führungsbuchten 40 für ein Kettenendglied 88 vorgesehen sind. Die zwei benachbarten Führungsbuchten 40 sind entlang entgegengesetzter Richtungen aus der Ebene 15 herausgebogen. Eine erste Führungsbucht 40, 41 ist entlang einer Auflagerichtung A aus der Ebene 15 herausgebogen, eine zweite Führungsbucht 40, 42 ist entgegen der Auflagerichtung A aus der Ebene 15 herausgebogen. Die Auflagerichtung A bezeichnet dabei die Richtung, entlang der die Befestigungsvorrichtung 100 von einer Unterlage, beispielsweise einer Seitenflanke eines Reifens, vorsteht, wenn die Befestigungsvorrichtung 100 auf der Unterlage aufliegt.

Ein zwischen Scheiteln 49 der beiden Führungsbuchten 40, 41, 42 gelegener Abschnitt 18 ist in dem Kettenendglied 88 aufgenommen. Ferner ist der Abschnitt 18 gleichzeitig jeweils ein Teil von zwei Führungsbuchten 40, wodurch die Konstruktion kompakt ist. Die Führungsbuchten 40 sind jeweils senkrecht zur Halterichtung H ausgebuchtet, um eine gute Führungswirkung zu erzielen. Der Abstand der Scheitel 49 ist an den Abstand der Schenkel 83 des Kettenendglieds 88 angepasst.

Die Öse 11 weist eine Öffnung 12 auf, die von den Schenkeln 20, 21, 22 begrenzt ist. Abschnitte 25 der Schenkel 20, 21, 22 verlaufen parallel zueinander und sind in den Beispielen gemäß Fig. 4 und 5 parallel zur Ebene 15. Sie können zur Ebene 15 hin oder von der Ebene 15 weg gebogen werden, um ein Einführen der Kettenendglieder 88 zu ermöglichen oder zu verhindern. Ein Abstand 26 der äußeren Seiten der beiden Abschnitte 25 zueinander kann kleiner sein als ein Innendurchmesser 78 der Öse 11, um eine kompakte Ausgestaltung zu ermöglichen und um die Abschnitte in die Öse 11 hineinbiegen zu können. Die Führungsbuchten 40 liegen jeweils gegenüber der Öffnung 12 der Öse 11.

Die Führungsbuchten 40 sind so ausgestaltet, dass im Halteabschnitt 10 eine zweizählige Rotationssymmetrie vorhanden ist, d.h. dass bei einer Rotation um 180° um eine in der Ebene 15 liegende Richtung senkrecht zur Spannrichtung S der Halteabschnitt 10 auf sich selbst abgebildet wird. Dies kann eine Herstellung vereinfachen. Beispielsweise kann die Befestigungsvorrichtung 100 aus einem einzigen Drahtstück 70 durch Querschnittsumformung und Biegen geformt werden. In einem ersten Schritt kann dabei der Halteabschnitt 10 durch Querschnittsumformung hergestellt werden. Aufgrund der zweizähligen Rotationssymmetrie muss bei einem anschließenden Biegevorgang zur Herstellung der Einhängeabschnitte 30 nicht auf die Orientierung des Halbzeugs geachtet werden. Eine solche Ausgestaltung hat ferner den Vorteil, dass zwei Kettenstränge 80, 81, 82 verwendet werden können, bei denen die Kettenglieder mit derselben Orientierung gedreht sind.

Der Halteabschnitt 10 weist eine Haltefläche 77 zum Halten des Kettenendglieds 88 entlang der Halterichtung H auf. An der innenliegenden Haltefläche 77 liegt ein Bug des Kettenendglieds 88 an. In einer Topansicht bildet die Haltefläche 77 einen Teilkreis. Die Haltefläche 77 ist gekrümmt und im Bereich der Buge der Kettenendglieder 88 jeweils senkrecht zur entsprechenden Halterichtung H.

In einem montierten Zustand kann die Kombination aus Halteabschnitt 10 und Kettenendglied 88 in der Auflagerichtung A gemessen eine Höhe 61 aufweisen, die kleiner ist als die Breite 66 des Kettenendglieds 88. Insbesondere kann die Höhe kleiner sein als 80%, 60% oder 50% der Breite 66. Dies kann insbesondere dadurch erreicht werden, dass das Kettenendglied 88 durch die Führungsbucht 40 schräg zur Auflagerichtung A orientiert ist. Eine minimale Dicke ist folglich durch die Dicke 63 des Kettenendglieds 88 gegeben. Diese Dicke 63 kann beispielsweise 30% der Breite 66 des Kettenendglieds 88 entsprechen.

Ferner kann in dem montierten Zustand die Kombination aus Halteabschnitt 10 und Kettenendglied 88 in der Auflagerichtung A gemessen eine Höhe 61 aufweisen, die kleiner ist als 150% der Kombination aus Dicke 62 des Materials im Halteabschnitt 10 plus Dicke 63 des Kettenendglieds 88. Insbesondere kann die Höhe kleiner sein als 120% der Kombination aus Dicke 62 des Materials im Halteabschnitt 10 plus Dicke 63 des Kettenendglieds 88. Als Untergrenze kann ein Wert von 100% der Kombination aus Dicke 62 des Materials im Halteabschnitt 10 plus Dicke 63 des Kettenendglieds 88 angesehen werden.

Der Querschnitt im Halteabschnitt 10 kann derart sein, dass das Kettenendglied 88 eine Beweglichkeit von max. ±45° um die Halterichtung H herum hat, vorzugsweise ±30°, bevorzugt ±20°, insbesondere ±15°. Andererseits soll eine bestimmte minimale Beweglichkeit vorhanden sein. Die Beweglichkeit kann daher größer als ±5° oder ±10° sein. Die Beweglichkeit kann entlang verschiedener Richtungen verschieden groß sein, zum Beispiel entlang der Auflagerichtung A und senkrecht dazu.

Eine Querschnittslänge 75 des Halteabschnitts 10 kann 30 bis 90% der Differenz aus der inneren lichten Länge 69 und der Kettendicke 67 des Kettenendglieds 88 am Bug entsprechen. Für eine gute Ausricht- und Haltewirkung kann der Wert insbesondere 70 bis 80% betragen.

Ebenfalls für eine gute Ausricht- und Haltewirkung kann eine Querschnittsbreite 76 des Halteabschnitts 10 30 bis 90% der inneren lichten Weite 68 des Kettenendglieds 88 entsprechen. Vorzugsweise beträgt dieser Wert 70 bis 80%.

### Bezugszeichen

- 10: Halteabschnitt
- 11: Öse
- 12: Öffnung
- 15: Ebene
- 18: Abschnitt
- 20: Schenkel
- 21: erster Schenkel
- 22: zweiter Schenkel
- 25: Abschnitt
- 26: Abstand
- 30: Einhängeabschnitt
- 40: Führungsbucht
- 41: erste Führungsbucht
- 42: zweite Führungsbucht
- 49: Scheitel
- 50: Kanal
- 61: Höhe
- 62: Dicke Material
- 63: Dicke Kettenendglied
- 66: Breite Kettenendglied
- 67: Kettendicke
- 68: innere lichte Weite
- 69: innere lichte Länge
- 70: Drahtstück
- 71: Querschnitt
- 72: Querschnitt
- 75: Querschnittslänge
- 76: Querschnittsbreite
- 77: Haltefläche
- 78: Innendurchmesser
- 80: Kettenstrang
- 81: erster Kettenstrang
- 82: zweiter Kettenstrang
- 83: Schenkel
- 88: Kettenendglied
- 90: Haltemittel
- 91: Halteseil
- 95: Metallseele
- 96: Mantel
- 100: Befestigungsvorrichtung
- 200: Anordnung

- A: Auflagerichtung
- F: Führungsrichtung
- F1: erste Führungsrichtung
- F2: zweite Führungsrichtung
- H: Halterichtung
- H1: erste Halterichtung
- H2: zweite Halterichtung
- S: Spannrichtung

## Patentansprüche

1. Befestigungsvorrichtung (100) zur Befestigung mindestens eines Kettenstrangs (80) an einem Haltemittel (90), umfassend einen eine Öse (11) bildenden Halteabschnitt (10), der in zwei mit dem Halteabschnitt (10) verbundene Schenkel (20) übergeht, wobei die Schenkel (20) unter Ausbildung jeweils eines hakenförmigen Einhängeabschnittes (30) zum Halteabschnitt (10) zurückgebogen sind, **dadurch gekennzeichnet, dass** der Halteabschnitt (10) wenigstens zwei wellenförmig aus der Ebene (15) des Halteabschnitts (10) gebogene Führungsbuchten (40) aufweist, wobei zwei Führungsbuchten (40) in entgegengesetzten Richtungen ausgebuchtet sind.

2. Befestigungsvorrichtung (100) nach Anspruch 1, wobei die Öse (11) eine Öffnung (12) aufweist, die von den Schenkeln (20) begrenzt ist.

3. Befestigungsvorrichtung (100) nach Anspruch 1 oder 2, wobei die Führungsbucht (40) einen Schenkel (83) eines Kettenendglieds (88) entlang einer Führungsrichtung (F) umgibt.

4. Befestigungsvorrichtung (100) nach einem der Ansprüche 1 bis 3, wobei der Halteabschnitt (10) zwei Führungsbuchten (40) für zwei Kettenstränge (80) aufweist.

5. Befestigungsvorrichtung (100) nach einem der Ansprüche 1 bis 4, wobei die Befestigungsvorrichtung (100) aus einem geformten Drahtstück (70) besteht.

6. Befestigungsvorrichtung (100) nach einem der Ansprüche 1 bis 5, wobei ein Querschnitt (72) der Befestigungsvorrichtung (100) im Bereich des Einhängeabschnitts (30) kreisförmig ist.

7. Befestigungsvorrichtung (100) nach einem der Ansprüche 1 bis 6, wobei ein Querschnitt der Befestigungsvorrichtung (100) im Bereich des Halteabschnitts (10) abgeflacht ist.

8. Befestigungsvorrichtung (100) nach einem der Ansprüche 1 bis 7, wobei der Halteabschnitt (10) eine zweizählige Rotationssymmetrie aufweist.

9. Befestigungsvorrichtung (100) nach einem der Ansprüche 1 bis 8, wobei die Schenkel (20) jeweils einen parallel zur Ebene (15) des Halteabschnitts (10) verlaufenden Abschnitt (25) aufweisen.

10. Befestigungsvorrichtung (100) nach einem der Ansprüche 1 bis 9, wobei in einem montierten Zustand die Kombination aus Halteabschnitt (10) und Kettenendglied (88) in einer Auflagerichtung (A) gemessen eine Höhe aufweist, die kleiner ist als die Breite (66) des Kettenendglieds (88).

11. Befestigungsvorrichtung (100) nach einem der Ansprüche 1 bis 10, wobei in einem montierten Zustand die Kombination aus Halteabschnitt (10) und Kettenendglied (88) in der Auflagerichtung (A) gemessen eine Höhe aufweist, die kleiner ist als 150% der Kombination aus Dicke (62) des Materials im Halteabschnitt (10) plus Dicke (63) des Kettenendglieds (88).

12. Anordnung (200), umfassend eine Befestigungsvorrichtung (10) nach einem der Ansprüche 1 bis 11, ein in der Befestigungsvorrichtung (100) aufgenommenes Haltemittel (90) und mindestens einen von der Befestigungsvorrichtung (100) an dem Haltemittel (90) befestigten Kettenstrang (80).

13. Anordnung nach Anspruch 12, wobei das Haltemittel (90) eine Metallseele (95) und einen mit der Metallseele (95) verbundenen Mantel (96) umfasst.

14. Anordnung nach Anspruch 13, wobei der Mantel (96) an die Metallseele (95) anextrudiert ist.

## Claims

1. Fastening device (100) for fastening at least one chain strand (80) to a holding means (90), comprising a holding section (10) which forms an eyelet (11) and merges into two limbs (20) connected to the holding section (10), the limbs (20) being bent back towards the holding section (10), in each case forming a hook-shaped suspension section (30), **characterized in that** the holding section (10) has at least two guide bays (40) bent out of the plane (15) of the holding section (10) in an undulating manner, wherein two guide bays (40) are bulged out in opposite directions.

2. Fastening device (100) according to claim 1, wherein the eyelet (11) has an opening (12) which is delimited by the limbs (20).

3. Fastening device (100) according to claim 1 or 2, wherein the guide bay (40) surrounds a leg (83) of a chain end link (88) along a guide direction (F).

4. Fastening device (100) according to one of claims 1 to 3, wherein the holding section (10) comprises two guide bays (40) for two chain strands (80).

5. Fastening device (100) according to any one of claims 1 to 4, wherein the fastening device (100) consists of a formed wire piece (70).

6. Fastening device (100) according to any one of claims 1 to 5, wherein a cross-section (72) of the fastening device (100) is circular in the region of the suspension portion (30).

7. Fastening device (100) according to one of claims 1 to 6, wherein a cross-section of the fastening device (100) is flattened in the region of the holding section (10).

8. Fastening device (100) according to any one of claims 1 to 7, wherein the holding section (10) has a two-centred rotational symmetry.

9. Fastening device (100) according to one of claims 1 to 8, wherein the limbs (20) each have a section (25) extending parallel to the plane (15) of the holding section (10).

10. Fastening device (100) according to one of claims 1 to 9, wherein, in an assembled state, the combination of holding section (10) and chain end link (88) has a height, measured in a support direction (A), which is smaller than the width (66) of the chain end link (88).

11. Fastening device (100) according to one of claims 1 to 10, wherein in an assembled state the combination of holding section (10) and chain end link (88) has a height measured in the support direction (A) which is less than 150% of the combination of thickness (62) of the material in the holding section (10) plus thickness (63) of the chain end link (88).

12. Arrangement (200) comprising a fastening device (10) according to any one of claims 1 to 11, a retaining means (90) received in the fastening device (100) and at least one chain strand (80) fastened to the retaining means (90) by the fastening device (100).

13. Arrangement according to claim 12, wherein the retaining means (90) comprises a metal core (95) and a sheath (96) connected to the metal core (95).

14. Arrangement according to claim 13, wherein the sheath (96) is extruded onto the metal core (95).

## Revendications

1. Dispositif de fixation (100) destiné à la fixation d'au moins un brin de chaîne (80) à un moyen de retenue (90), comprenant une section de retenue (10) formant un anneau (11), qui se prolonge en deux branches (20) connectées à la section de retenue (10), dans lequel les branches (20) sont repliées vers la section de retenue (10) pour former chacune une section de suspension (30) en forme de crochet, **caractérisé en ce que** la section de retenue (10) comporte au moins deux échancrures de guidage (40) courbées en forme de vague à partir du plan (15) de la section de retenue (10), dans lequel deux échancrures de guidage (40) sont échancrées dans des directions opposées.

2. Dispositif de fixation (100) selon la revendication 1, dans lequel l'anneau (11) comporte une ouverture (12) qui est délimitée par les branches (20).

3. Dispositif de fixation (100) selon la revendication 1 ou 2, dans lequel l'échancrure de guidage (40) entoure une branche (83) d'un maillon d'extrémité de chaîne (88) selon une direction de guidage (F).

4. Dispositif de fixation (100) selon l'une des revendications 1 à 3, dans lequel la section de retenue (10) présente deux échancrures de guidage (40) pour deux brins de chaîne (80).

5. Dispositif de fixation (100) selon l'une des revendications 1 à 4, dans lequel le dispositif de fixation (100) est constituée d'un morceau de fil conformé (70).

6. Dispositif de fixation (100) selon l'une des revendications 1 à 5, dans lequel la forme de la section transversale (72) du dispositif de fixation (100) dans la zone de la section de suspension (30) est circulaire.

7. Dispositif de fixation (100) selon l'une des revendications 1 à 6, dans lequel une section transversale du dispositif de fixation (100) est aplatie dans la zone de la section de retenue (10).

8. Dispositif de fixation (100) selon l'une des revendications 1 à 7, dans lequel la section de retenue (10) présente une double symétrie de rotation.

9. Dispositif de fixation (100) selon l'une des revendications 1 à 8, dans lequel les branches (20) présentent chacune une section (25) s'étendant parallèlement au plan (15) de la section de retenue (10).

10. Dispositif de fixation (100) selon l'une des revendications 1 à 9, dans lequel, à l'état assemblé, la combinaison de la section de retenue (10) et du maillon d'extrémité de chaîne (88) présente une hauteur, mesurée dans une direction d'appui (A), qui est inférieure à la largeur (66) du maillon d'extrémité de chaîne (88).

11. Dispositif de fixation (100) selon l'une des revendications 1 à 10, dans lequel, à l'état assemblé, la combinaison de la section de retenue (10) et du maillon d'extrémité de chaîne (88), mesurée en direction d'appui (A), présente une hauteur inférieure à 150 % de la combinaison de l'épaisseur (62) du matériau dans la section de retenue (10) plus l'épaisseur (63) du maillon d'extrémité de chaîne (88).

12. Agencement (200) comprenant un dispositif de fixation (10) selon l'une des revendications 1 à 11, un moyen de retenue (90) logé dans le dispositif de fixation (100), et au moins un brin de chaîne (80) fixé par le dispositif de fixation (100) au moyen de retenue (90).

13. Agencement selon la revendication 12, dans lequel le moyen de retenue (90) comprend une âme métallique (95) et une gaine (96) reliée à l'âme métallique (95).

14. Agencement selon la revendication 13, dans lequel la gaine (96) est extrudée sur l'âme métallique (95).
